# FASCICULE DE BREVET EUROPEEN

(11) **EP 2 183 830 B1**
(45) Date de publication et mention de la délivrance du brevet: **26.02.2014**
(21) Numéro de dépôt: 08806134.6
(22) Date de dépôt: 01.07.2008
(51) Int. Cl.: H02G 3/22, B60R 16/02

(54) **BAGUE DE CABLAGE INTEGREE DANS LA PAROI D'UN VEHICULE AUTOMOBILE**
IN EINER AUTOMOBILWAND INTEGRIERTER VERKABELUNGSRING
CABLING RING EMBEDDED IN THE WALL OF AN AUTOMOBILE

(30) Priorité: 02.08.2007 FR 0756899
(43) Date de publication de la demande: 12.05.2010
(73) Titulaire: Renault S.A.S., 92100 Boulogne-Billancourt (FR)
(72) Inventeur: BOURDET, Sebastien, F-78530 Buc (FR)
(86) Numéro de dépôt international: PCT/FR2008/051210
(87) Numéro de publication internationale: WO 2009/019354

(56) Documents cités:
- JP-A- 8 331 732
- JP-A- 2001 251 737
- JP-A- 2006 320 161
- US-B1- 6 995 317

## Description

La présente invention concerne une bague de câblage intégrée dans une paroi d'un véhicule automobile et plus particulièrement la paroi séparant le compartiment moteur de la boîte à eau située sous le pare-brise d'un véhicule.

La présente invention propose un ensemble de bague de câblage intégré à un plan de joint entre une première cloison de chauffage et une seconde cloison de boîte à eau d'un véhicule automobile, ladite bague comportant un corps principal dans lequel est réalisé un aménagement par lequel un câble traverse la bague, et des moyens de fixation permettant de rendre solidaire la bague à la première cloison de chauffage.

### ETAT DE LA TECHNIQUE :

On connaît de nombreux exemples de bagues de câblage pour les véhicules automobiles. Ces bagues sont par exemple destinées au passage des câbles du mécanisme d'essuie-vitre du véhicule. Ce type de bague est généralement fixé dans un trou de la cloison et doit assurer l'étanchéité des compartiments définis de part et d'autre de la cloison.

D'autres types de bague sont fixés sur le chant de la cloison de séparation ce qui entraîne des processus de montage complexes et une mauvaise étanchéité. Par ailleurs, l'implantation des bagues montées sur chant génère des modifications profondes des cloisons ce qui représente un coût supplémentaire de réalisation.

Un autre inconvénient de ces bagues de câblage est qu'elles nécessitent une surface plane importante lors de leur implantation dans une cloison. En effet, il est nécessaire que la section du trou réalisé soit supérieure à celle de la bague et à la taille des connecteurs qui passent au travers de celle-ci. Les bagues de ce type occupent donc beaucoup d'espace sur une cloison et compliquent leur implantation.

Enfin, les bagues d'étanchéité pour les traversées de cloison qui sont actuellement sur le marché n'assurent pas une bonne étanchéité acoustique entre les compartiments.

Le document JP 08 331732 A décrit également un ensemble bague de câblage - plan de joint d'un véhicule automobile, la bague de câblage étant intégrée au plan de joint entre deux cloisons, ladite bague comportant un corps principal dans lequel est réalisé un aménagement par lequel un câble traverse la bague.

### EXPOSE DE L'INVENTION :

Pour remédier à ces inconvénients, la présente invention a pour objet un ensemble de bague câblage qui simplifie leur implantation sur les cloisons de séparation d'un véhicule et assure une meilleure étanchéité aux fluides et acoustique.

Ces buts sont atteints conformément à l'invention par un ensemble bague de câblage présentant les caractéristiques énoncées à la revendication 1.

Grâce à ces caractéristiques la bague de câblage en fixée sur un plan permettant de réaliser une meilleure étanchéité et peut être implantée en différentes positions sans engendrer de profondes modifications des parois.

Selon d'autres caractéristiques avantageuses de l'invention :
- l'épaisseur de la troisième portion de l'excroissance est inférieure à l'épaisseur de la portion plane de la cloison de chauffage ;
- la bague est maintenue sur la portion plane de la cloison de chauffage par la pression exercée par la deuxième portion de l'excroissance sur ladite portion plane ;
- le corps principal comporte une portion plane recevant l'excroissance et une portion en forme de V s'inscrivant dans le plan de joint entre la première cloison de chauffage et la deuxième cloison de boîte à eau, ledit plan de joint recevant un joint d'étanchéité ;
- la portion plane de du cops principal comporte sur sa périphérie une lèvre souple assurant l'étanchéité du trou sur la portion plane lorsque la bague est fixée sur la cloison de chauffage.

### DESCRIPTION DES FIGURES :

Les caractéristiques et avantages de l'invention ressortiront de la description qui suit, laquelle est purement illustrative et non limitative et doit être lue au regard des dessins annexés, sur lesquels :
- la figure 1 est une vue d'ensemble en perspective d'un ensemble de bague conforme à la présente invention ;
- la figure 2 est une vue schématique de profil illustrant l'ensemble de bague de câblage de la figure 1 ;
- la figure 3 est une d'ensemble en perspective du dessous de l'ensemble de bague de câblage lui-même.

### DESCRIPTION DETAILLEE DE MODES DE REALISATION PREFERES DE L'INVENTION :

Dans la description qui va suivre, des chiffres de référence identiques désignent des pièces identiques ou ayant des fonctions similaires.

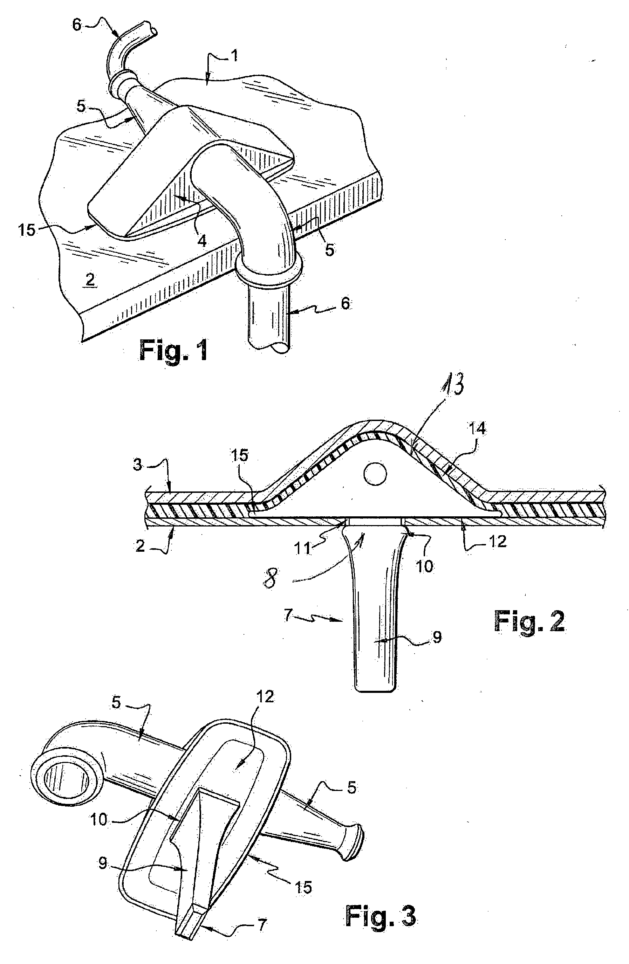

On a représenté à la figure 1 un ensemble de bague 1 de câblage en position d'utilisation. La bague 1 de câblage ci-dessous exposée selon l'invention est une pièce pouvant évoluer d'une position libre à une position d'utilisation par l'intermédiaire d'un utilisateur manipulant la bague 1 pour la fixer ou la cliper dans un trou 8 réalisé sur une paroi en tôle.

Dans le mode de réalisation décrit à la figure 1 , la bague est montée dans le plan de joint entre une première cloison 2 de chauffage et une seconde cloison 3 de boîte à eau. L'étanchéité le long de ces deux cloisons est réalisée au moyen d'un joint 14 en mousse collé sur la fermeture de la boîte à eau.

La figure 1 représente la bague 1 en position d'utilisation et fixée sur une portion sensiblement horizontale de la cloison 2 de chauffage, la cloison 3 de boîte à eau étant enlevée pour une meilleure compréhension de l'invention.

La bague 1 de câblage comporte un corps principal 4 dans lequel est réalisé un aménagement 5 permettant de faire passer un câble au travers de la bague 1. Dans un mode de réalisation préféré de l'invention, l'aménagement 5 est constitué de deux portions tubulaires disposées de part et d'autre du corps principal 4 et débouchant chacune dans un compartiment différent séparés par l'assemblage de la cloison de chauffage 2 et la cloison de boîte à eau 3.

La figure 2 représente l'ensemble de bague 1 de câblage selon une vue de côté qui permet de mettre en évidence l'assemblage réalisé par la première cloison 2 de chauffage, la bague 1, le joint 14 et la seconde cloison 3 de boîte à eau. Le joint 14 est donc pressé entre la cloison de chauffage 2 et la cloison 3 de boîte à eau pour assurer une meilleure étanchéité. L'espace occupé par le corps principal 4 de la bague 1 est suffisant pour faire passer un câble 6 au travers tout en assurant aussi l'étanchéité au niveau de la bague 1.

Le corps principal 4 de la bague 1 comporte une partie plane 12 sur laquelle sont reliés des moyens 7 de fixation et une partie 13 en forme de V sur laquelle vient s'appliquer le joint 14 d'étanchéité.

Les moyens 7 de fixation de la bague 1 sont constitués d'une excroissance composée d'une première portion 9 de section inférieure à celle du trou 8 réalisé sur la portion plane de la cloison 2 de chauffage. Cette première portion 9 permet à l'utilisateur de pouvoir tirer cette excroissance de la bague 1 au travers du trou 8 pour fixer solidement la bague 1 sur la cloison 2 de chauffage.

L'excroissance comporte une deuxième portion 10 de section légèrement supérieure à celle du trou 8 de façon à l'enclencher de l'autre côté de la cloison 2 de chauffage au moment de la fixation de la bague 1 par l'utilisateur. Une troisième portion 11 de l'excroissance permet de relier ce moyen 7 de fixation au corps principal 4 de la bague 1. Cette troisième portion 11 est de section inférieure à celle du trou 8 et d'épaisseur légèrement inférieure à celle de l'épaisseur de la cloison 2 de chauffage.

En position d'utilisation, la bague 1 est rigidement fixée sur la cloison 2 de chauffage. En effet, une fois enclenchée au travers du trou 8, la deuxième portion 10 de l'excroissance 7 exerce une pression sur la cloison 2 de chauffage. La réalisation du clipsage de la bague 1 sur la cloison 2 permet à une lèvre 15 souple réalisée sur la périphérie de la partie plane 12 du corps principal 4 de rendre étanché les deux compartiments situés de par d'autre de l'assemblage des deux cloisons 2 et 3.

Comme l'illustre la figure 2, la lèvre 15 est réalisée en matériau souple de type plastique ou caoutchouc permettant d'épouser la portion plane de la cloison 2 de chauffage. Cette lèvre 15 permet en outre d'atténuer les vibrations acoustiques en procurant d'avantage de stabilité à la bague 1 lorsqu'elle est en position d'utilisation.

## Revendications

1. Ensemble bague de câblage (1) - plan de joint d'un véhicule automobile, la bague (1) de câblage étant intégrée au plan de joint entre une première cloison (2) de chauffage et une seconde cloison (3) de boîte à eau du véhicule automobile, ladite bague (1) comportant un corps principal (4) dans lequel est réalisé un aménagement (5) par lequel un câble (6) traverse la bague (1), et des moyens de fixation (7) permettant de rendre solidaire la bague (1) à la première cloison (2) de chauffage,
**caractérisé en ce que** la bague (1) est montée sur une portion sensiblement plane de la première cloison (2) de chauffage, la portion plane de la première cloison (2) de chauffage définissant un trou (8) destiné à recevoir les moyens (7) de fixation de la bague (1), les moyens de fixation (7) comportant une excroissance solidaire du corps principal traversant le trou (8) défini dans la cloison (2) de chauffage, l'excroissance comportant une première portion (9) de circonférence inférieure à celle du trou (8), une deuxième portion (10) de circonférence supérieure à celle du trou (8) et une troisième portion (11) inférieure à celle du trou (8) et solidaire du corps principal (4).

2. Ensemble selon la revendication 1, **caractérisé en ce que** l'épaisseur de la troisième portion (11) de l'excroissance est inférieure à l'épaisseur de la portion plane de la cloison (2) de chauffage.

3. Ensemble selon la revendication 1 ou 2, **caractérisé en ce que** la bague (1) est maintenue sur la portion plane de la cloison (2) de chauffage par la pression exercée par la deuxième portion (10) de l'excroissance sur ladite portion plane.

4. Ensemble selon l'une des revendications 1 à 3, **caractérisé en ce que** le corps principal (4) comporte une portion plane (12) recevant l'excroissance et une portion (13) en forme de V s'inscrivant dans le plan de joint entre la première cloison (2) de chauffage et la deuxième cloison (3) de boîte à eau, ledit plan de joint recevant un joint d'étanchéité (14).

5. Ensemble selon la revendication 4, **caractérisé en ce que** la portion plane du corps principal (4) comporte sur sa périphérie une lèvre souple (15) assurant l'étanchéité du trou (8) sur la portion plane lorsque la bague (1) est fixée sur la cloison (2) de chauffage.

## Patentansprüche

1. Einheit aus Verkabelungsring (1) und Trennebene eines Kraftfahrzeugs, wobei der Verkabelungsring (1) zwischen einer ersten Heizungstrennwand (2) und einer zweiten Wasserkastentrennwand (3) des Kraftfahrzeugs in die Trennebene integriert ist, wobei der Ring (1) einen Hauptkörper (4), in dem eine Einrichtung (5) ausgeführt ist, durch die ein Kabel (6) den Ring (1) durchquert, und Befestigungseinrichtungen (7) aufweist, die es ermöglichen, den Ring (1) fest mit der ersten Heizungstrennwand (2) zu verbinden,
**dadurch gekennzeichnet, dass** der Ring (1) auf einen im Wesentlichen ebenen Abschnitt der ersten Heizungstrennwand (2) montiert ist, wobei der ebene Abschnitt der ersten Heizungstrennwand (2) ein Loch (8) definiert, das dazu bestimmt ist, die Befestigungseinrichtungen (7) des Rings (1) aufzunehmen, wobei die Befestigungseinrichtungen (7) einen fest mit dem Hauptkörper verbundenen Fortsatz aufweisen, der das in der Heizungstrennwand (2) definierte Loch (8) durchquert, wobei der Fortsatz einen ersten Abschnitt (9) mit einem kleineren Umfang als der des Lochs (8), einen zweiten Abschnitt (10) mit einem größeren Umfang als der des Lochs (8) und einen dritten Abschnitt (11) mit einem kleineren Umfang als der des Lochs (8) und fest mit dem Hauptkörper (4) verbunden aufweist.

2. Einheit nach Anspruch 1, **dadurch gekennzeichnet, dass** die Dicke des dritten Abschnitts (11) des Fortsatzes geringer als die Dicke des ebenen Abschnitts der Heizungstrennwand (2) ist.

3. Einheit nach Anspruch 1 oder 2, **dadurch gekennzeichnet, dass** der Ring (1) auf dem ebenen Abschnitt der Heizungstrennwand (2) durch den vom zweiten Abschnitt (10) des Fortsatzes auf den ebenen Abschnitt ausgeübten Druck gehalten wird.

4. Einheit nach einem der Ansprüche 1 bis 3, **dadurch gekennzeichnet, dass** der Hauptkörper (4) einen ebenen Abschnitt (12), der den Fortsatz aufnimmt, und einen V-förmigen Abschnitt (13) aufweist, der in der Trennebene zwischen der ersten Heizungstrennwand (2) und der zweiten Wasserkastentrennwand (3) liegt, wobei die Trennebene eine Dichtung (14) aufnimmt.

5. Einheit nach Anspruch 4, **dadurch gekennzeichnet, dass** der ebene Abschnitt des Hauptkörpers (4) auf seinem Umfang eine elastische Lippe (15) aufweist, die die Dichtheit des Lochs (8) auf dem ebenen Abschnitt gewährleistet, wenn der Ring (1) auf der Heizungstrennwand (2) befestigt ist.

## Claims

1. Wiring ring (1)/mating face of a motor vehicle assembly, the wiring ring (1) being incorporated in the mating face between a first heater partition (2) and a second cowl partition (3) of the motor vehicle, said ring (1) comprising a main body (4) in which is made an arrangement (5) by means of which a wire (6) passes through the ring (1), and fastening means (7) for connecting the ring (1) to the first heater partition (2), **characterized in that** the ring (1) is mounted on a generally flat portion of the first heater partition (2), the flat portion of the first heater partition (2) surrounding a hole (8) intended to receive the fastening means (7) of the ring (1), the fastening means (7) comprising a projecting part connected to the main body passing through the hole (8) surrounded by the heater partition (2), the projecting part comprising a first portion (9) with a circumference smaller than that of the hole (8), a second portion (10) with a circumference greater than that of the hole (8) and a third portion (11) with a circumference smaller than that of the hole (8) and connected to the main body (4).

2. Assembly according to Claim 1, **characterized in that** the thickness of the third portion (11) of the projecting part is less than the thickness of the flat portion of the heater partition (2).

3. Assembly according to Claim 1 or 2, **characterized in that** the ring (1) is held on the flat portion of the heater partition (2) by the pressure exerted by the second portion (10) of the projecting part on said flat portion.

4. Assembly according to one of Claims 1 to 3, **characterized in that** the main body (4) comprises a flat portion (12) carrying the projecting part and a V-shaped portion (13) which is inserted in the mating face between the first heater partition (2) and the second cowl partition (3), said mating face carrying a gasket (14).

5. Assembly according to Claim 4, **characterized in that** the flat portion of the main body (4) comprises on its periphery a flexible lip (15) providing the sealing of the hole (8) in the flat portion when the ring (1) is mounted on the heater partition (2).
